# EUROPÄISCHE PATENTSCHRIFT

(11) **EP 1 540 303 B1**
(45) Veröffentlichungstag und Bekanntmachung des Hinweises auf die Patenterteilung: **23.01.2013**
(21) Anmeldenummer: 03747968.0
(22) Anmeldetag: 05.09.2003
(51) Int. Cl.: G01N 1/06

(54) **Kryostat-Mikrotom mit einer Temperierungsvorrichtung**
Cryostat-microtome with a tempering device
Microtome cryogenique avec dispositif de régulation de température

(30) Priorität: 21.09.2002 DE 10244055
(43) Veröffentlichungstag der Anmeldung: 15.06.2005
(73) Patentinhaber: Microm International GmbH, 69190 Walldorf (DE)
(72) Erfinder: HEID, Hans, L., 69245 Bammental (DE); TEPPKE, Dieter, 68723 Schwetzingen (DE); FANK, Reiner, 69231 Rauenberg (DE); BERLETH, Manfred, 69214 Eppelheim (DE)
(74) Vertreter: Lasch, Hartmut
(86) Internationale Anmeldenummer: PCT/EP2003/009856
(87) Internationale Veröffentlichungsnummer: WO 2004/029588

(56) Entgegenhaltungen:
- DE-A- 19 528 180
- DE-A- 19 640 044
- DE-U- 1 962 263
- DE-U- 20 214 646
- US-A- 3 296 821

## Beschreibung

Die Erfindung betrifft ein Kryostat-Mikrotom mit einer Temperierungsvorrichtung gemäß dem Oberbegriff des Anspruchs 1.

Derartige Temperiervorrichtungen dienen dazu, dass Schnitte von gefrorenen histologischen Proben in einem Kryostaten bei verschiedenen Temperaturen durchführbar sind, ohne dass die Kammer des Kryostaten auf eine andere Temperatur gebracht werden muss. Der Hintergrund ist der, dass verschiedene Gewebearten, wie z. B. Fett oder Hirn, bei verschiedenen Temperaturen, z. B. im Bereich von -30 bis -35° oder von -15° optimal schneidbar sind. Müsste die Temperatur der gesamten Kryostatkammer auf die gewünschte Temperatur gebracht werden, so würde dies viel Zeit in Anspruch nehmen.

Deshalb bietet der Prospekt "Universal-Mikrotom-Kryostate Serie HM 500" eine Ausrüstungsvariante "O" an, die der eingangs genannten Temperierungsvorrichtung entspricht. Dabei befindet sich die Kryostatkammer auf einer mittleren Temperatur und die Temperierungsvorrichtung sorgt für die gewünschte Objekttemperatur.

Bei dieser Temperierungsvorrichtung wird die Betriebsmittelzufuhr unmittelbar von der am Objektträger angeordneten Kühl- oder Kühl- und Heizeinrichtung seitlich von einem Winkel gehalten weggeführt und als Kabel und Schlauchbündel zur Innenwandung der Kryostatkammer geführt. Der Nachteil dieser Anordnung besteht zunächst darin, dass diese Betriebsmittelzufuhr bei Arbeiten am Mikrotom hinderlich ist, da sie zu viel Raum in einem Bereich beansprucht, in dem Arbeiten am Mikrotom, wie Proben- und Messerwechsel, durchgeführt werden müssen. Weiterhin übt diese Betriebsmittelzufuhr aufgrund ihrer seitlichen Anordnung durch Gewicht und der durch die Kälte bedingten Steifigkeit eine Kraft auf den Objektträger aus. Eine solche unmittelbar am Objektträger angreifende und auch noch einseitig wirkende Kraft beeinflusst jedoch die Schnittgenauigkeit, welche wegen der hauchfeinen Schnitte im µ-Bereich liegen muss.

Eine Temperierungsvorrichtung der eingangs genannten Art mit einer seitlichen Wegführung der Betriebsmittelzufuhr vom Objektträger ist auch aus der DE 196 40 044 A1 bekannt. Aus der DE 19 62 263 U1 ist eine Temperierungsvorrichtung bekannt, von der die Betriebsmittelzufuhr in nicht näher offenbarter Art und Weise vom Objektträger weggeführt ist.

Weiterhin ist aus der DE 195 28 180 C2 eine Stromversorgung für einen Messverstärker einer Einrichtung zur Detektierung des Vorschubs des Objektkopfes bekannt. Dieses Messelement ist jedoch dem Objektkopf nachgeordnet in einem Isolierkörper angeordnet, der fest mit einem als Objektkopfträger dienenden Hohlzylinder gelagert ist. Die Stromversorgung tritt als freihängender Kabelbaum aus dem Hohlzylinder und der Zylinderführung an der Unterseite heraus, wobei die jeweiligen Aussparungen so groß ausgestaltet sind, dass das Kabel im Zuge der Stellbewegungen nicht eingeklemmt wird.

Aus dieser Schrift ergibt sich jedoch keine Anregung für die Ausgestaltung einer Betriebsmittelzufuhr einer Temperierungsvorrichtung. Eine solche Temperierungsvorrichtung muss sich, um das Objekt kühlen zu können, unmittelbar am Objektträger befinden. Wollte man die Betriebsmittelzufuhr einer Temperierungsvorrichtung der eingangs genannten Art in ähnlicher Weise wie die o.g. Stromzuführung an der Rückseite des Objektkopfträgers anordnen, so müsste man sie durch den Objektkopfträger und den Führungsschlitten hindurchleiten. Dabei steht der Fachmann jedoch vor einem ungelösten Problem: Der Objektkopf muss auswechsel- und ausrichtbar sein. Daher müsste die Betriebsmittelzufuhr auftrennbar durch eine Objektträgeraufnahme hindurchgeführt werden und dürfte auch eine Schwenkung des Objektträgers (in der o.g. Schrift als Gelenkkugel ausgebildet) zur Ausrichtung desselben nicht behindern. Daraus ergibt sich, dass eine entsprechend der genannten Stromzuführung ausgestaltete Anordnung einer Betriebsmittelzufuhr für eine Temperierungsvorrichtung nicht oder nicht mit vertretbarem technischen Aufwand möglich ist. Vielmehr muss die Betriebsmittelzufuhr direkt von der Temperierungsvorrichtung weggeführt werden, wobei es jedoch zu den Problemen kommt, die zur Temperierungsvorrichtung der Ausführungsvariante "0" des eingangs erwähnten Kryostaten beschrieben wurden.

Der Erfindung liegt daher die Aufgabe zugrunde, ein Kryostat-Mikrotom mit einer Temperierungsvorrichtung der eingangs genannten Art verfügbar zu machen, die bei Arbeiten am Mikrotom möglichst nicht hinderlich ist und die Schnittgenauigkeit möglichst wenig beeinträchtigt.

Die Aufgabe wird erfindungsgemäß durch ein Kryostat-Mikrotom mit den Merkmalen des Anspruchs 1 gelöst. Dabei ist vorgesehen, dass die Betriebsmittelzufuhr in einer Führung verschiebbar gelagert ist, die am Führungsschlitten angeordnet und parallel zur Richtung der Zustellung ausgerichtet ist und dass die Betriebsmittelzufuhr vom Objektkopf zu der Führung hingeführt ist.

Durch die erfindungsgemäße Anordnung führt die Betriebsmittelzufuhr, von der Kühl- oder Kühl- und Heizeinrichtung am Objektkopf ausgehend, nicht mehr teils gestützt, teils durchhängend quer durch die Kryostatkammer, sondern sie kann relativ nahe am Objektkopf in Richtung des Führungsschlittens geleitet werden. Durch diese Verlegung ist sie bei Arbeiten am Mikrotom nicht mehr im Weg. Da der Führungsschlitten die Schnittbewegung mit Objektkopf und Objekt mitvollzieht, übt die Betriebsmittelleitung bedingt durch die Schnittbewegung praktisch keine Kraft mehr auf den Objektkopf aus, so dass die Genauigkeit auch nicht mehr durch solche Kräfte beeinträchtigt werden kann.

Die Relativbewegung, die zwischen Objektkopf und den Führungsschlitten erforderlich ist, ist die vor jedem Schnitt erfolgende Zustellbewegung. Dieser Zustellbewegung wird dadurch Rechnung getragen, dass die Betriebsmittelzufuhr in der Führung verschiebbar gelagert ist und sich entsprechend der Zustellung verschieben kann. Dabei muss die Führung derart ausgebildet sein, dass die Betriebsmittelzufuhr leicht in ihr läuft, aber doch so gehalten wird, dass es durch die Weiterführung der Betriebsmittelzufuhr nach dem Führungsschlitten zu keinen nennenswerten Zugkräften durch die Führung hindurch auf den Objektkopf kommen kann. Dieser ist daher frei von Kräften, welche die Genauigkeit beeinträchtigen können. Wirken die Kräfte der weitergeführten Betriebsmittelführung statt auf den Objektkopf auf den Führungsschlitten und dies in einem vom Objektkopf entfernten Bereich, so beeinträchtigen diese Kraftwirkungen die Schnittgenauigkeit nicht mehr in nennenswerter Weise, da der Angriffspunkt solcher Zugkräfte sich weit weg vom Schnittbereich und auch nicht mehr seitlich von diesem befindet.

Eine zweckmäßige Ausgestaltung sieht vor, dass die Betriebsmittelzufuhr von der Unterseite der Kühl- oder Kühl - und Heizeinrichtung wegführt, da sie auf diese Weise in einem Bereich verläuft, in dem sie bei Arbeiten am Objektkopf des Mikrotoms oder am Messerträger nicht im Weg ist. Die Betriebsmittelzufuhr wird derart ausgestaltet, dass sie der Kühl- oder Kühl- und Heizeinrichtung das notwendige Betriebsmittel zuführt. In der Regel wird eine Flüssigkeitszufuhr, eine Flüssigkeitsabfuhr sowie mindestens eine Kabelverbindung benötigt, wobei letztere dazu dient, die Temperatur zu steuern. Außerdem kann natürlich auch vorgesehen sein, dass Elektrizität als Betriebsmittel dient.

Zur Erzielung einer leichtgängigen, aber möglichst spielfreien Führung, welche auch die Zugkräfte, bedingt durch die Weiterführung der Betriebsmittelzufuhr zur Innenwand des Kryostaten, aufnimmt, wird vorgeschlagen, dass die Führung aus mindestens einem Rohr besteht, dass durch drei Linienanlagen geführt ist. Dabei kann die Betriebsmittelzufuhr in einem Rohr erfolgen oder es ist vorgesehen, dass die Führung aus drei Einzelführungen besteht, wobei zwei je für die Flüssigkeitszufuhr und -abfuhr und eine für die mindestens eine Kabelverbindung vorgesehen sind. Besteht das Rohr aus Metall und werden die Linienanlagen von einem Kunststoff gebildet, so wird eine verschleißarme gut gängige und auch spielfreie Lagerung erzielt, welche bedingt durch Schrumpfungen und Ausdehnungen des Materials durch die großen Temperaturdifferenzen möglichst gering beeinträchtigt wird.

Da oftmals eine Ausrichtung des Objektträgers durch Schwenkung desselben gegenüber dem Führungsschlitten erforderlich ist, wird vorzugsweise vorgesehen, dass die Betriebsmittelzufuhr zwischen der Kühl- oder Kühl- und Heizeinrichtung und der Führung mindestens einen elastischen Bogen aufweist, der diese Schwenkung zulässt. Bei einer derartigen Ausrichtung des Objektträgers kommt es auch zu einer Verschiebung der Betriebsmittelzufuhr, welche jedoch bereits dadurch ermöglicht ist, dass diese in der Führung verschiebbar gelagert ist.

Bezüglich des Platzbedarfs, der Anordnung in Bereichen, an denen keine ständigen Arbeiten erfolgen müssen, und auch bezüglich der wirkenden Kräfte ist es zweckmäßig, wenn die Betriebsmittelzufuhr an der rückwärtigen Seite des Führungsschlittens aus der Führung austritt und mittels mindestens eines großen elastischen Bogens zu einer Halterung an der Innenwand des Kryostaten geführt ist. Dadurch kommt es in Folge der Schnittbewegung, welche der Führungsschlitten mit dem Objektkopf vollzieht, nur zu geringen Zugkräften, die sich durch ihren weit vom Schneidbereich entfernten Angriffspunkt praktisch nicht mehr beeinträchtigend auf die Schnittqualität auswirken.

Da für verschiedene Arbeiten am Mikrotom dieses auch einmal aus der Kryostatkammer entfernt werden muss, ist es zweckmäßig, wenn mindestens eine Kupplung vorgesehen ist, durch die die in der Kryostatkammer verlaufende Betriebsmittelzufuhr abtrennbar ist. Auf diese Weise ist es möglich, die Kupplung zu lösen, das Mikrotom aus der Kryostatkammer zu entnehmen und es nach Durchführung der vorgesehenen Arbeiten wieder in die Kühlkammer zu bringen und anzuschließen.

Die Kühl- oder Kühl- und Heizeinrichtung kann auf verschiedenste Weise ausgebildet sein. Als reine Kühleinrichtung kann beispielsweise ein Verdampfer vorgesehen sein, in dem eine Kühlflüssigkeit verdampft und auf diese Weise die geforderte Temperaturabsenkung des Objekts erfolgt. Eine andere Möglichkeit besteht darin, einen Wärmetauscher vorzusehen, welcher dann sowohl als Kühl- als auch als Heizeinrichtung betrieben werden kann, je nach dem, ob die darin geführte Flüssigkeit kälter oder wärmer als die Temperatur der Kryostatkammer ist.

Die Kühl- oder Kühl- und Heizeinrichtung kann auch mindestens ein Peltierelement aufweisen, dann ist es auf einfache Weise möglich, durch Umkehrung der Polung des Stromanschlusses entweder Wärme oder Kälte an der Platte des Peltierelements zu erzeugen, welche dem Objekt zugewandt ist. Eine sehr günstige Ausgestaltung sieht vor, dass das Peltierelement zur Wärme- oder Kälteabgabe an den Objektträger und der Wärmetauscher zur Wärmeabführung von dem Peltierelement dient, wenn letzteres zur Kühlung des Objekts eingesetzt wird. Auf diese Weise hat man die einfache Temperatursteuerung des Peltierelements genutzt und gleichzeitig dafür gesorgt, dass die mit der Kälteerzeugung für das Objekt gleichzeitig auftretende Wärmeerzeugung des Peltierelements nicht die Kryostatkammer aufheizt. Dies müsste sonst durch die Kühleinrich- tung des Kryostaten wieder kompensiert werden, was bezüglich Energiebilanz und Regelungsgenauigkeit nachteilhaft wäre.

Selbstverständlich könnte auch auf andere Weise eine reine Kühleinrichtung oder eine Kühl- und Heizeinrichtung ausgebildet sein. Je nach dieser konkreten Ausgestaltung richtet sich dann auch die Betriebsmittelzufuhr und die Art und Weise ihrer näheren Ausgestaltung. Unabhängig davon garantiert die Erfindung eine räumlich günstige Anordnung, welche auch Kräfte vermeidet, die die Schnittqualität beeinflussen könnten.

Die Erfindung wird nachfolgend anhand eines in der Zeichnung dargestellten Ausführungsbeispiels erläutert. Es zeigen
- Fig. 1: eine Prinzipdarstellung des Ausführungsbeispiels und
- Fig. 2: eine Einzelheit derselben.

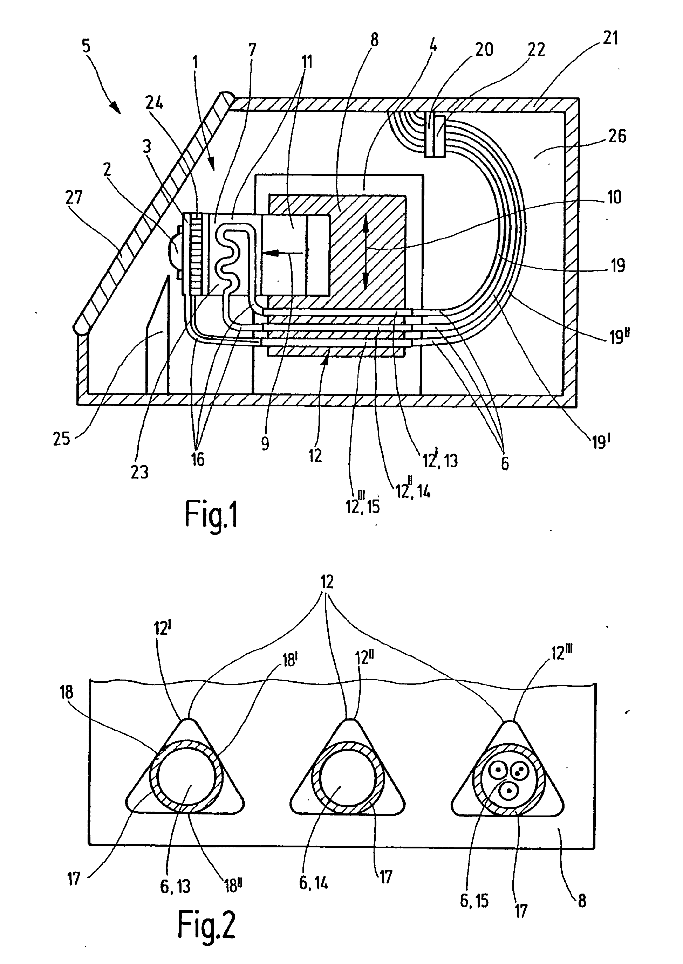

Fig. 1 zeigt eine Prinzipdarstellung eines Ausführungsbeispiels eines Kryostaten 5 mit einer Temperierungsvorrichtung 1. Um Objekte 2, das sind in der Regel histologische Proben, bei tiefen Temperaturen zu schneiden, wird ein Mikrotom 4 in der Kryostatkammer 26 des Kryostaten 5 angeordnet. Die Kryostatkammer 26 wird durch eine nicht dargestellte Kühleinrichtung auf eine mittlere Arbeitstemperatur gekühlt. Zur Einstellung der optimalen Arbeitstemperatur zum Schneiden eines Objekts 2 dient eine Kühl- oder Kühl - und Heizeinrichtung 7, die an einem Objektträger 3 für das Objekt 2 angeordnet ist. Eine Betriebsmittelzufuhr 6 dient dem Betrieb der Kühl- oder Kühl- und Heizeinrichtung 7, indem sie diese mit einem Kühlmittel sowie mit Elektrizität versorgt.

Im dargestellten Ausführungsbeispiel befindet sich der Objektträger 3 auf einem Peltierelement 24, das der Kühlung oder auch der Erwärmung des Objekts 2 dient, je nach dem, ob dieses in einem Temperaturbereich oberhalb der Kryostatkammertemperatur oder in einem Bereich unterhalb geschnitten werden muss. Wird das Peltierelement 24 zur Kühlung herangezogen, so entsteht an seiner dem Objekt 2 abgewandten Platte in nicht unbeträchtlichem Maß Wärme, welche zweckmäßigerweise abgeführt wird. Zu diesem Zweck ist ein Wärmetauscher 23 angeordnet, der beispielsweise von kalter Sole durchströmt wird und die Wärme des Peltierelements 24 abführt, um eine Aufheizung der Kryostatkammer 26 zu vermeiden.

Die Kühl- oder Kühl- und Heizeinrichtung 7 mit dem Objektträger 3 sind auf einem Objektkopf 11 angeordnet, welcher in einem Führungsschlitten 8 derart gelagert ist, dass eine Zustellung des Objekts 2 in Richtung eines Pfeils 9 möglich ist, die für jeden weiteren Schnitt die Dicke des Schnitts angibt. Dieser Führungsschlitten 8 ist im Mikrotom 4 derart gelagert, dass er die durch einen Doppelpfeil 10 angezeigte Schnittbewegung ausführen kann und auf diese Weise das Objekt 2 an einem Messerhalter mit Messer 25 vorbeigeführt wird. Auf die Darstellung von Stellelementen, Schlittenführung und Antrieben wurde verzichtet.

Nach dem eingangs genannten Stand der Technik wurde die Betriebsmittelzufuhr 6 von der Kühl- oder Kühl- und Heizeinrichtung 7 seitlich zur Innenwand 21 der Kryostatkammer 26 weggeführt. Durch die Erfindung werden die damit verbundenen, eingangs beschriebenen Nachteile vermieden, indem die Betriebsmittelzufuhr 6 unmittelbar von der Kühl- oder Kühl - und Heizeinrichtung 7 zu einer Führung 12 hingeführt wird, welche im Führungsschlitten 8 gelagert ist. Dabei sind allerdings elastische Bögen 16 vorgesehen, welche dazu dienen, dass der Objektträger 3 auf dem Objektkopf 11 in einem geringen Masse schwenkbar ist, um eine Ausrichtung des Objekts 2 gegenüber dem Messer 25 vornehmen zu können.

Die Führung 12 tritt an der rückwärtigen Seite des Führungsschlittens 8 aus diesem heraus und danach wird die Betriebsmittelzufuhr 6 in großen elastischen Bögen 19, 19' und 19" zu einer Halterung 20 geführt, welche an der Innenwand 21 der Kryostatkammer 26 angebracht ist. An dieser Halterung 20 befindet sich eine Kupplung 22, mittels der die Betriebsmittelzufuhr 6 der Kühl- oder Kühl- und Heizeinrichtung 7 und zweckmäßigerweise auch sonstige Versorgungsleitungen des Mikrotoms 4 unterbrochen werden können, um das Mikrotom 4 aus der Kryostatkammer 26 entnehmen zu können.

Von der an der Halterung 20 befindlichen feststehenden Kupplungshälfte werden diese Leitungen weiter nach draußen geführt, um sie mit entsprechenden nicht dargestellten Aggregaten und Anschlüssen zu verbinden. Selbstverständlich kann die Kupplung 22 auch an einer anderen Stelle der innerhalb der Kryostatkammer 26 verlaufenden Betriebsmittelzufuhr 6 angeordnet werden.

An der Vorderseite des Kryostaten 5 ist noch angedeutet, dass eine Öffnung 27 in Form einer Schiebe- oder Klapptüre vorgesehen ist, die dazu dient, den Objektträger 3 mit Objekten 2 zu beschicken, beziehungsweise am Messerhalter 25 Messer auszuwechseln. Auch dieser ist hier nur symbolisch dargestellt. Die Öffnung 27 dient selbstverständlich auch zu der beschriebenen Entnahme des Mikrotoms 4, um Arbeiten an diesem ausführen zu können.

Die Betriebsmittelzufuhr 6 der Fig. 1 wird anhand der ausführlicheren Darstellung der Fig. 2 näher erläutert. Nachdem die Betriebsmittelzufuhr 6 in den elastischen Bögen 16 zur Führung 12 hingeführt ist, wird sie dort mit dieser Führung 12 verbunden. Im gezeichneten Ausführungsbeispiel handelt es sich bei der Führung 12 um Einzelführungen 12', 12" und 12''', wobei eine Flüssigkeitszufuhr 13, eine Flüssigkeitsabfuhr 14 sowie die dargestellten Kabelverbindungen 15 jeweils separat geführt sind.

Diese drei Einzelführungen 12', 12", 12''' sind als Rohre 17 ausgebildet, in denen, was die Einzelführungen 12' und 12" anbetrifft, die Sole zur Versorgung der Kühl- oder Kühl- und Heizeinrichtung 7 geführt ist. In der Einzelführung 12''' sind dagegen die erforderlichen Kabelverbindungen 15 verlegt. Bei diesen handelt es sich beispielsweise um die Stromversorgung des Peltierelements 24 sowie auch um die Leitung eines Sensors, der der Temperatursteuerung dient.

Wesentlich an der Führung 12 beziehungsweise an den Einzelführungen 12', 12" und 12'" ist, dass diese so geführt sind, dass sie zwar leichtgängig sind, jedoch die Kräfte aufnehmen können, welche durch die Weiterführung der Betriebsmittelzufuhr 6 mittels der großen elastischen Bögen 19, 19', 19" entstehen können. Dazu ist vorgesehen, dass die Rohre 17 jeweils Linienanlagen 18, 18' und 18" aufweisen. Dabei sind die Rohre 17 vorzugsweise aus Metall und die Bauelemente, welche die Linienanlagen 18, 18', 18" beinhalten, aus einem Kunststoff, der gegenüber dem Metall eine geringe Reibungskraft aufweist. Dieser Kunststoff sollte auch nachgiebig sein, damit er Schrumpfungen und Ausdehnungen aufgrund der großen Temperaturschwankungen aufnehmen kann. Diese Kunststoffelemente sind in dem Führungsschlitten 8 gelagert, dies ist nicht näher dargestellt.

Selbstverständlich ist dies lediglich ein Ausführungsbeispiel der erfindungsgemäßen Lösung. Beispielsweise wäre es auch möglich, die Führung 12 in anderer Weise auszugestalten, wobei wesentlich die vorgenannten Eigenschaften sind. Beispielsweise wäre es möglich, die Führung 12 als ein Rohr 17 auszugestalten, in dem dann sowohl die Flüssigkeitszufuhr 13 als auch die Flüssigkeitsabfuhr und die Kabelverbindungen 15 gelagert sind. Denkbar wäre es natürlich auch, nur ein Peltierelement 24 vorzusehen, womit dann die Betriebsmittelzufuhr 6 lediglich aus elektrischen Kabelverbindungen 15 besteht und diese in der entsprechenden Weise geführt sind. Die Weiterführung der Betriebsmittelzufuhr 6 nach den Führungen 12 könnte selbstverständlich ebenfalls anders ausgestaltet sein, wesentlich ist dabei lediglich, dass eine derartige Weiterführung die durch den Doppelpfeil 10 dargestellte Schnittbewegung aufnimmt, ohne dass in kritischer Weise Kräfte auf den Führungsschlitten 8 wirken.

### Bezugszeichenliste

- 1: Temperierungsvorrichtung
- 2: Objekt
- 3: Objektträger
- 4: Mikrotom
- 5: Kryostat
- 6: Betriebsmittelzufuhr
- 7: Kühl- oder Kühl- und Heizeinrichtung
- 8: Führungsschlitten
- 9: Pfeil: Zustellung
- 10: Doppelpfeil: Schnittbewegung
- 11: Objektkopf
- 12: Führung
- 12', 12", 12"': Einzelführungen
- 13: Flüssigkeitszufuhr
- 14: Flüssigkeitsabfuhr
- 15: Kabelverbindung(en)
- 16: elastischer Bogen
- 17: Rohr
- 18, 18', 18": Linienanlagen
- 19, 19', 19": große elastische Bögen
- 20: Halterung
- 21: Innenwand der Kryostatkammer
- 22: Kupplung
- 23: Wärmetauscher
- 24: Peltierelement
- 25: Messerhalter mit Messer
- 26: Kryostatkammer
- 27: Öffnung der Kryostatkammer zur Mikrotombedienung (z.B. Schiebe- oder Klapptür)

## Patentansprüche

1. Kryostat-Mikrotom mit einer Temperierungsvorrichtung (1) für Objekte (2) an einem Objektträger (3), mit einem Führungsschlitten (8) für die Zustellung (9) und Schnittbewegung (10) eines dem Objektträger (3) lagernden Objektkopfes (11), mit einer Betriebsmittelzufuhr (6) zu einer am Objektträger (3) angeordneten Kühl - oder Kühl- und Heizeinrichtung (7) sowie mit einer Temperatursteuerung, **dadurch gekennzeichnet, dass** die Betriebsmittelzufuhr (6) in einer Führung (12) verschiebbar gelagert ist, die am Führungsschlitten (8) angeordnet und parallel zur Richtung der Zustellung (9) ausgerichtet ist und dass die Betriebsmittelzufuhr (6) vom Objektkopf (11) zu der Führung (12) hingeführt ist.

2. Kryostat-Mikrotom nach Anspruch 1, **dadurch gekennzeichnet, dass** die Betriebsmittelzufuhr (6) von der Unterseite der Kühl- oder Kühl- und Heizeinrichtung (7) wegführt.

3. Kryostat-Mikrotom nach Anspruch 1 oder 2, **dadurch gekennzeichnet, dass** die Betriebsmittelzufuhr (6) aus einer Flüssigkeitszufuhr (13), einer Flüssigkeitsabfuhr (14) sowie aus mindestens einer Kabelverbindung (15) besteht.

4. Kryostat-Mikrotom nach Anspruch 1, 2 oder 3, **dadurch gekennzeichnet, dass** die Führung (12) aus mindestens einem Rohr (17) besteht, das durch drei Linienanlagen (18, 18', 18'') geführt ist.

5. Kryostat-Mikrotom nach Anspruch 4, **dadurch gekennzeichnet, dass** das Innere des mindestens einen Rohrs (17) der Betriebsmittelzufuhr (6) dient.

6. Kryostat-Mikrotom nach einem der Ansprüche 3 bis 5, **dadurch gekennzeichnet, dass** die Führung (12) aus drei Einzelführungen (12', 12", 12'") besteht, wobei zwei je für die Flüssigkeitszufuhr (13) und -abfuhr (14) und eine für die mindestens eine Kabelverbindung (15) vorgesehen ist.

7. Kryostat-Mikrotom nach Anspruch 4, 5 oder 6, **dadurch gekennzeichnet, dass** das Rohr (17) aus Metall besteht und die Linienanlagen (18, 18', 18") von einem Kunststoff gebildet sind.

8. Kryostat-Mikrotom nach einem der Ansprüche 1 bis 7, **dadurch gekennzeichnet, dass** die Betriebsmittelzufuhr (6) zwischen der Kühl- oder Kühl- und Heizeinrichtung (7) und der Führung (12) mindestens einen elastischen Bogen (16) aufweist, der eine Ausrichtung des Objektträgers (3) durch Schwenkung desselben gegenüber dem Führungsteil (8) zulässt.

9. Kryostat-Mikrotom nach einem der Ansprüche 1 bis 8, **dadurch gekennzeichnet, dass** die Betriebsmittelzufuhr (6) an der rückwärtigen Seite (19) des Führungsschlittens (8) aus der Führung (12) austritt und mittels mindestens eines großen elastischen Bogens (19, 19', 19") zu einer Halterung (20) an der Innenwand (21) des Kryostaten (5) geführt ist.

10. Kryostat-Mikrotom nach Anspruch 9, **dadurch gekennzeichnet, dass** mindestens eine Kupplung (22) vorgesehen ist, durch die die in der Kryostatkammer (26) verlaufende Betriebsmittelzufuhr (6) abtrennbar ist.

11. Kryostat-Mikrotom nach einem der Ansprüche 1 bis 10, **dadurch gekennzeichnet, dass** eine als Verdampfer ausgebildete Kühleinrichtung (7) vorgesehen ist.

12. Kryostat-Mikrotom nach einem der Ansprüche 1 bis 10, **dadurch gekennzeichnet, dass** eine als Wärmetauscher (23) ausgebildete Kühl- oder Kühl- und Heizeinrichtung (7) vorgesehen ist.

13. Kryostat-Mikrotom nach Anspruch 12 und 13, **dadurch gekennzeichnet, dass** das Peltierelement (24) zur Wärme - oder Kälteabgabe an den Objektträger (3) angefügt ist und der Wärmetauscher (23) zur Wärmeabführung an dem Peltierelement (24) angeordnet ist.

14. Kryostat-Mikrotom nach Anspruch 12 oder 13, **dadurch gekennzeichnet, dass** das Peltierelement (24) zur Wärme - oder Kälteabgabe an den Objektträger (39) angefügt ist und der Wärmetauscher (23) zur Wärmeabführung an dem Peltierelement (24) angeordnet ist.

## Claims

1. A cryostat microtome with a temperature-adjusting device (1) for specimens (2) on a slide (3), with a guide carriage (8) for the advance (9) and cutting movement (10) of a specimen head (11) mounting the specimen holder (3), with an operating medium feed (6) to a cooling or cooling and heating unit (7) arranged on the specimen holder (3), and with a temperature controller, **characterised in that** the operating medium feed (6) is mounted displaceably in a guide (12), which is arranged on the guide carriage (8) and is oriented parallel to the direction of advance (9), and **in that** the operating medium feed (6) leads from the specimen head (11) to the guide (12).

2. A cryostat microtome according to claim 1, **characterised in that** the operating medium feed (6) leads away from the bottom of the cooling or cooling and heating unit (7).

3. A cryostat microtome according to claim 1 or claim 2, **characterised in that** the operating medium feed (6) consists of a liquid feed (13), a liquid outflow (14) and at least one cable connection (15).

4. A cryostat microtome according to claim 1, 2 or 3, **characterised in that** the guide (12) consists of at least one tube (17), which is guided by three linear resting means (18, 18', 18").

5. A cryostat microtome according to claim 4, **characterised in that** the inside of the at least one tube (17) serves in operating medium feed (6).

6. A cryostat microtome according to any one of claims 3 to 5, **characterised in that** the guide (12) consists of three individual guides (12', 12", 12"'), wherein two are provided for the liquid feed (13) and the liquid outflow (14) and one is provided for the at least one cable connection (15).

7. A cryostat microtome according to claim 4, 5 or 6, **characterised in that** the tube (17) consists of metal and the linear resting means (18, 18', 18") are formed of a plastics material.

8. A cryostat microtome according to any one of claims 1 to 7, **characterised in that** between the cooling or cooling and heating unit (7) and the guide (12) the operating medium feed (6) comprises at least one resilient bend (16), which allows orientation of the specimen holder (3) by swivelling it relative to the guide part (8).

9. A cryostat microtome according to any one of claims 1 to 8, **characterised in that** the operating medium feed (6) exits from the guide (12) at the rear (19) of the guide carriage (8) and is guided by means of at least one large resilient bend (19, 19', 19") to a holder (20) on the internal wall (21) of the cryostat (5).

10. A cryostat microtome according to claim 9, **characterised in that** at least one coupling (22) is provided, by means of which the operating medium feed (6) extending in the cryostat chamber (26) may be detached.

11. A cryostat microtome according to any one of claims 1 to 10, **characterised in that** a cooling device (7) configured as an evaporator is provided.

12. A cryostat microtome according to any one of claims 1 to 10, **characterised in that** a cooling or cooling and heating unit (7) configured as a heat exchanger (23) is provided.

13. A cryostat microtome according to claim 12 and claim 13, **characterised in that** the Peltier element (24) is attached to the specimen holder (3) to output heat or cold and the heat exchanger (23) is arranged on the Peltier element (24) to dissipate heat.

14. A cryostat microtome according to claim 12 or claim 13, **characterised in that** the Peltier element (24) is attached to the specimen holder (3) to output heat or cold and the heat exchanger (23) is arranged on the Peltier element (24) to dissipate heat.

## Revendications

1. Microtome cryostatique avec dispositif de régulation de la température (1) conçu pour des objets (2) au niveau d'un support d'objet (3), avec un coulisseau de guidage (8) pour la distribution (9) et le mouvement de coupe (10) d'une tête d'objet (11) logeant le support d'objet (3), avec une amenée de moyen de fonctionnement (6) conduisant à un dispositif de refroidissement ou de refroidissement et de chauffage (7) disposé au niveau du support d'objet (3) ainsi qu'avec un élément de commande de température, **caractérisé en ce que** l'amenée de moyen de fonctionnement (6) est disposée de façon coulissante dans un guide (12) disposé au niveau du coulisseau de guidage (8) et orienté parallèlement à la direction de la distribution (9) et que l'amenée de moyen de fonctionnement (6) est introduite de la tête d'objet (11) vers le guide (12).

2. Microtome cryostatique selon la revendication 1, **caractérisé en ce que** l'amenée de moyen de fonctionnement (6) sort du côté inférieur du dispositif de refroidissement ou de refroidissement et de chauffage (7).

3. Microtome cryostatique selon la revendication 1 ou 2, **caractérisé en ce que** l'amenée de moyen de fonctionnement (6) se compose d'une amenée de fluide (13), d'une évacuation de fluide (14) ainsi que d'au moins une liaison câblée (15).

4. Microtome cryostatique selon la revendication 1, 2 ou 3, **caractérisé en ce que** le guide (12) se compose d'au moins un tube (17) guidé à travers trois installations de lignes (18, 18', 18").

5. Microtome cryostatique selon la revendication 4, **caractérisé en ce que** l'intérieur de l'au moins un tube (17) sert à l'amenée de moyen de fonctionnement (6).

6. Microtome cryostatique selon l'une quelconque des revendications 3 à 5, **caractérisé en ce que** le guide (12) se compose de trois guides individuels (12', 12", 12"'), deux guides étant respectivement prévus pour l'amenée de fluide (13) et l'évacuation de fluide (14) et un guide étant prévu pour l'au moins une liaison câblée (15).

7. Microtome cryostatique selon la revendication 4, 5 ou 6, **caractérisé en ce que** le tube (17) est formé en métal et les installations de lignes (18, 18', 18") sont en matière plastique.

8. Microtome cryostatique selon l'une quelconque des revendications 1 à 7, **caractérisé en ce que** l'amenée de moyen de fonctionnement (6) prévue entre le dispositif de refroidissement ou de refroidissement et de chauffage (7) et le guide (12) comporte au moins un arc élastique (16) permettant un alignement du support d'objet (3) par pivotement de celui-ci par rapport à la partie de guide (8).

9. Microtome cryostatique selon l'une quelconque des revendications 1 à 8, **caractérisé en ce que** l'amenée de moyen de fonctionnement (6) sort hors du guide (12) au niveau du côté arrière (19) du coulisseau de guidage (8) et est guidée à l'aide d'au moins un grand arc élastique (19, 19', 19") conduisant à une fixation (20) prévue au niveau de la paroi intérieure (21) du cryostat (5).

10. Microtome cryostatique selon la revendication 9, **caractérisé en ce qu'**au moins un couplage (22) est prévu permettant de séparer l'amenée de moyen de fonctionnement (6) s'étendant dans le compartiment cryostatique (26).

11. Microtome cryostatique selon l'une quelconque des revendications 1 à 10, **caractérisé en ce qu'**un dispositif de refroidissement (7) prenant la forme d'un évaporateur est prévu.

12. Microtome cryostatique selon l'une quelconque des revendications 1 à 10, **caractérisé en ce qu'**un dispositif de refroidissement ou de refroidissement et de chauffage (7) prenant la forme d'un échangeur thermique (23) est prévu.

13. Microtome cryostatique selon la revendication 12 et 13, **caractérisé en ce que** l'élément de Peltier (24) est ajouté au support d'objet (3) pour émettre de la chaleur ou du froid et l'échangeur thermique (23) est disposé au niveau de l'élément de Peltier (24) pour évacuer la chaleur.

14. Microtome cryostatique selon la revendication 12 ou 13, **caractérisé en ce que** l'élément de Peltier (24) est ajouté au support d'objet (3) pour émettre de la chaleur ou du froid et l'échangeur thermique (23) est disposé au niveau de l'élément de Peltier (24) pour évacuer la chaleur.
